# EUROPÄISCHE PATENTSCHRIFT

(11) **EP 2 535 457 B1**
(45) Veröffentlichungstag und Bekanntmachung des Hinweises auf die Patenterteilung: **01.01.2014**
(21) Anmeldenummer: 11004888.1
(22) Anmeldetag: 15.06.2011
(51) Int. Cl.: E01C 19/00, G01B 21/08, G01B 21/18

(54) **Straßenfertiger mit Schichtdickenmessvorrichtung**
Road finisher with coating measuring device
Finisseuse de route dotée d'un dispositif de mesure de l'épaisseur de couche

(43) Veröffentlichungstag der Anmeldung: 19.12.2012
(73) Patentinhaber: Joseph Vögele AG, 67067 Ludwigshafen (DE)
(72) Erfinder: Hanfland, Dennis, 68169 Mannheim (DE)
(74) Vertreter: Grünecker, Kinkeldey, Stockmair & Schwanhäusser

(56) Entgegenhaltungen:
- EP-A1- 0 510 215
- GB-A- 2 448 820
- US-A1- 2003 000 097

## Beschreibung

Die vorliegende Erfindung betrifft einen Straßenfertiger gemäß dem Oberbegriff des Anspruchs 1.

Während der Einbaufahrt eines Straßenfertigers soll die Schichtdicke des neu eingebauten Straßenbelags kontinuierlich und möglichst in Echtzeit gemessen werden. Die Berechnung der Schichtdicke und deren Visualisierung für einen Bediener sollen vor allem dafür sorgen, dass der Straßenfertiger eine minimale beziehungsweise eine maximale Schichtdickenfertigung gewährleistet. Dies ist wichtig, weil der Hersteller an vertraglich abgemachte Schichtdicken gebunden ist. Ebenso soll erreicht werden, dass der neu eingebaute Straßenbelag unterschiedlichen Witterungsverhältnissen ausgesetzt werden kann, ohne dabei beschädigt zu werden.

Zur Messung der Schichtdicke eines neu eingearbeiteten Straßenbelags sind in der Praxis unterschiedliche Systeme bekannt. Beispielsweise werden Vorrichtungen verwendet, die mittels Ultraschall oder Radar die Schichtdicke ermitteln. Dabei besteht jedoch der technische Nachteil, dass zu einer exakten Schichtdickenmessung Reflexionskörper eingesetzt werden müssen, um die Oberfläche des neu verlegten Straßenbelags eindeutig lokalisieren zu können.

Gemäß einer anderen Methode, die Schichtdicke des Straßenbelags zu messen, werden in den neuen Straßenbelag Messkörper bis auf das darunter befindliche Planum eingeschoben. Nachteilhaft daran ist, dass durch das Einschieben der Messkörper im neuen Straßenbelag Schäden wie beispielsweise Unebenheiten zurückbleiben.

Bekannt sind auch Systeme, die anhand einer Höhenmessung zum Untergrund und anhand einer Neigungsmessung der Einbaubohle errechnen können, welche Schichtdicke an einer hinteren Kante der Einbaubohle verlegt wurde. Bei solchen Systemen werden herkömmliche Abstandssensoren zur Höhenmessung wie beispielsweise Ultraschall oder Lasersensoren verwendet. Zur Neigungsmessung der Einbaubohle sind solche Systeme mit einem Neigungssensor ausgestattet, welcher am Einbaubohlenverbund befestigt ist. Obwohl sich anhand dieser Systeme auf mancherlei Untergrund gute Messergebnisse erreichen lassen, sind Schichtdickenmesssysteme, die zur Ermittlung der Schichtdicke einen Neigungssensor verwendet besonders auf unebenem Boden dazu geneigt, schlechte Messergebnisse zu liefern. Nachteilig ist auch, dass ein zur Berechnung der Schichtdicke verwendeter Neigungssensor extrem empfindlich für Beschleunigungen beziehungsweise abrupte Neigungsänderungen des Straßenfertigers oder der Einbaubohle ist, was zu schlechten Messergebnissen führt.

Beispielsweise beschreibt die DE 100 25 462 A1 ein System zur Ermittlung der Schichtdicke eines neu verlegten Straßenbelags durch Verwendung eines Neigungssensors. Darin wird eine Einrichtung zur Bestimmung der Schichtdicke auf der Grundlage eines vorbestimmten Abstands der Position eines Höhensensors von der Bohlenhinterkante, der erfassten Höhe über dem Untergrund und einer ermittelten Zugarmbohlenverbundneigung, welche mittels eines Neigungssensors erfasst wird, offenbart. Wie bereits angedeutet wurde, ist bei einer solchen Lösung das Messergebnis der Schichtdicke stark vom Neigungssensor abhängig, welcher bereits durch kleine Erschütterungen beziehungsweise Beschleunigungen irritierbar ist. Dabei verursachen bereits kleine Fehler der Neigungssensoren große Fehler in der Berechnung der Schichtdicke.

Die DE 100 25 474 A1 beschreibt eine Vorrichtung zur Bestimmung der Schichtdicke eines durch einen Straßenfertiger auf einen Untergrund aufzubringenden Materialeinbaus, wobei der Straßenfertiger einen Traktor, zumindest einen an dem Traktor höhenverstellbar und drehbar angebrachten Zugarm, eine starr an dem zumindest einen Zugarm angebrachte schwimmende Bohle, die mit dem Zugarm einen Zugarm-Bohlen-Verbund bildet, und ein mit seiner Unterseite auf der Unterlage aufliegendes Fahrwerk aufweist. Ferner umfasst die Vorrichtung einen am Traktor stationär angebrachten Abstandssensor zum Erfassen eines relativen Abstands zwischen einer Bezugsposition des Traktors und einer Bezugsposition des Zugarm-Bohlen-Verbunds, wobei die Bezugsposition des Traktors eine vorbestimmte Positionsbeziehung zu der Unterseite des Fahrwerks aufweist und die Bezugsposition des Zugarm-Bohlen-Verbunds eine vorbestimmte Positionsbeziehung zu einer unteren Hinterkante der Bohle aufweist.

Die DE 198 51 153 C1 betrifft ein Verfahren zur Vermessung einer Fahrbahn, bei dem das Fahrbahnprofil meßtechnisch erfaßt wird. Unter Fahrbahn wird hierbei insbesondere eine Verkehrsfläche, z. B. eine Strasse oder eine Autobahn, verstanden, die im Rahmen von Straßenbau- oder Reparaturarbeiten mit einer Anzahl von Lagen oder Schichten errichtet wird. Die Erfindung bezieht sich weiter auf ein System zur Durchführung des Verfahrens mit einer mobilen Prüfeinrichtung.

Die EP 0 510 215 B1 beschreibt eine Vorrichtung zum Regeln einer Fahrbahnbelagdicke. Die Vorrichtung umfasst Höhensensoren und Neigungssensoren, welche allesamt derart an einem Bohlenverbund angeordnet sind, dass sie einer Bewegung der Bohle nachgehen.

Die US 7,172,363 B2 bezieht sich auf eine Pflastermaschine. Die Pflastermaschine kann eine Leistungsquelle, ein Traktionssystem, einen Fülltrichter, der konfiguriert ist, um Pflastermaterial zu enthalten, und eine oder mehrere Fördereinrichtungen aufweisen, die konfiguriert sind, um das Pflastermaterial von dem Fülltrichter zu übertragen. Die Pflastermaschine kann auch ein Schild bzw. eine Abziehbohle aufweisen, die konfiguriert ist, um eine Matte des Pflastermaterials auszulegen. Die Pflastermaschine umfasst weiter mindestens einen vorderen Sensor, der an einem Vorderteil der Pflastermaschine montiert ist und konfiguriert ist, um die Höhe von einer Oberfläche zum vorderen Sensor zu messen, und mindestens einen hinteren Sensor, der an der Pflastermaschine montiert ist und konfiguriert ist, um die Höhe von einer Oberfläche der Matte zum hinteren Sensor zu messen. Die Pflastermaschine umfasst auch eine Steuervorrichtung, die konfiguriert ist, um eine Dicke der Matte durch Bestimmung einer Differenz zwischen einer oder mehreren vorderen Höhenmessungen, die durch mindestens einen vorderen Sensor aufgenommen wurden, und einer oder mehreren hinteren Höhenmessungen zu bestimmen, die von dem mindestens einen hinteren Sensor aufgenommen wurden. Die Sensoren sind auf einem Träger befestigt, der fest mit der Bohle verbunden ist.

Die US 2003/0000097 A1 beschreibt eine Messvorrichtung mit einem Balken, auf dem Messsensoren angeordnet sind. Die Messvorrichtung ist schwenkbar um ein Gelenk gelagert, um während der Fahrt, trotz Unebenheiten der Fahrbahn, in einer horizontalen Lage zu bleiben beziehungsweise in diese zurückzukehren.

Die GB 2 448 820 A beschreibt eine Messvorrichtung, die an einem Fahrzeugrad befestigbar ist. Die Messvorrichtung ist derart gelagert, dass sie selbst bei unebener Fahrbahn beziehungsweise aufsteigender oder absteigender Fahrbahn senkrecht zur Erdanziehungskraft ausgerichtet bleibt beziehungsweise sich in diese Lage zurückbewegt.

Angesichts der durch den Stand der Technik offenkundigen technischen Probleme und Nachteile liegt daher der Erfindung die Aufgabe zugrunde, einen Straßenfertiger mit einer Messvorrichtung zur Ermittlung der Schichtdicke eines neu eingearbeiteten Straßenbelags zur Verfügung zu stellen, wobei die Messvorrichtung unempfindlich für Beschleunigungen beziehungsweise Neigungsänderungen des Straßenfertigers ist, und dadurch ein verbessertes Messergebnis der Schichtdicke ermöglicht.

Diese Aufgabe wird gelöst mit den technischen Merkmalen des Anspruchs 1. Verbesserte Weiterbildungen der Erfindung sind durch die technischen Merkmale der Unteransprüche gegeben.

Gemäß der Erfindung umfasst der Straßenfertiger eine Messvorrichtung zur Ermittlung einer Schichtdicke eines neu eingebauten Straßenbelags sowie eine Einbaubohle zum Aufbringen des neuen Straßenbelags. Die Messvorrichtung weist ein Tragelement und mindestens zwei Sensoren auf, die an dem Tragelement befestigt sind. Die Sensoren sind dazu ausgebildet, einen Abstand zum Planum, also zum Untergrund wo noch kein Straßenbelag verlegt wurde, oder zum neu verlegten Straßenbelag zu messen. Erfindungsgemäß ist vorgesehen, dass die Messvorrichtung derart drehbar am Straßenfertiger oder der Einbaubohle gelagert ist, dass sie eine Gleichgewichtslage mit einem vorgegebenen Winkel zur Horizontalen aufweist, die sie behält oder in die sie zurückkehrt, selbst wenn sich die Neigung des Straßenfertigers oder der Bohle zur Horizontalen ändert.

Dabei kann der vorgegebene Winkel, wenn sich die Messvorrichtung in der Gleichgewichtslage befindet, durch eine Stellung unterschiedlicher Komponenten der Messvorrichtung relativ zur Horizontalen definiert sein. Beispielsweise wäre es möglich, den vorgegebenen Winkel durch eine Stellung des Tragelements relativ zur Horizontalen zu definieren, wobei der vorgegebene Winkel Null wäre, wenn das Tragelement in der Horizontalen ausgerichtet ist, um die Messvorrichtung in der Gleichgewichtslage zu halten.

Alternativ dazu ließe sich der vorgegebene Winkel auch unter Berücksichtigung einer Meßrichtung der Sensoren relativ zur Horizontalen definieren. In einem Anwendungsfall, wenn die Meßrichtung der Sensoren senkrecht auf einen horizontal ausgerichteten Untergrund zeigt, würde der vorgegebene Winkel 90 Grad entsprechen. Entsprechend würde sich der vorgegebene Winkel, also der Winkel zwischen der Horizontalen und der Meßrichtung der Sensoren, ändern, wenn die Gleichgewichtslage der Meßvorrichtung nicht in der Horizontalen liegt.

Dabei ist es möglich, eine Gleichgewichtslage der Messvorrichtung so einzustellen, dass die Messvorrichtung im Wesentlichen horizontal zum Planum ausgerichtet ist, auf welchem sich der Straßenfertiger, also dessen Zugmaschine, vorwärts bewegt. Als Gleichgewichtslage für die Messvorrichtung ist gemeint, dass diese sich nicht zusammen mit dem Straßenfertiger beziehungsweise der Einbaubohle bewegt, wenn diese ihre Neigung ändern, oder nach einer solchen Neigungsänderung des Fertigers oder der Bohle innerhalb kurzer Zeit wieder in die Gleichgewichtslage zurückkehrt, also demzufolge weitgehend unabhängig von einer Bewegung des Straßenfertiger beziehungsweise der Einbaubohle ist.

Durch die drehbare Lagerung der Messvorrichtung ist es also möglich, Unebenheiten im Untergrund, welche während der Fahrt zu ständigen Neigungsänderungen des Straßenfertigers oder der Einbaubohle führen, bewußt auszugleichen, sodass die Neigungsänderungen nicht in der Berechnung der Schichtdicke berücksichtigt werden.

Außerdem ist die erfindungsgemäße Messvorrichtung einfach und kostengünstig herstellbar und kann auf einfache Art und Weise an dem Straßenfertiger, insbesondere an einer Zugmaschine des Straßenfertigers, beziehungsweise an der Einbaubohle gelagert werden.

Erfindungsgemäß ist die Messvorrichtung um eine Drehachse relativ zum Straßenfertiger oder relativ zur Bohle drehbar gelagert. Dadurch wird während einer Fahrt des Straßenfertigers erreicht, dass die Messvorrichtung in ihrer Gleichgewichtslage bleibt oder in diese innerhalb kurzer Zeit zurückkehren kann.

Erfindungsgemäß verläuft die Drehachse durch einen Schwerpunkt der Messvorrichtung. Dadurch entsteht der technische Vorteil, dass sich die Messvorrichtung durch Neigungsänderungen während der Einbaufahrt nicht so leicht aus der Ruhe, also aus der Gleichgewichtslage, bringen lässt. Dies liegt vor allem daran, dass Momente, die während der Einbaufahrt, beispielsweise durch eine Beschleunigung des Straßenfertigers, auf die Messvorrichtung wirken, reduziert werden beziehungsweise komplett verhindert werden.

In einer weiteren Ausführungsform der Erfindung ist die Messvorrichtung dazu ausgebildet, an verschiedenen Stellen des Straßenfertigers oder der Einbaubohle anbringbar zu sein. Dadurch ist es möglich die Messvorrichtung flexibel zu nutzen, wobei insbesondere spezifische Eigenschaften, wie beispielsweise die Messfähigkeit der Sensoren oder konstruktive Merkmale des Tragelements, berücksichtigt werden können. Außerdem kann dadurch die Wetterlage am Einbauort bzw. die Temperatur über dem Einbaumaterial berücksichtigt werden. Schließlich stehen dem Bedienpersonal dadurch mehrere Befestigungsmöglichkeiten zur Verfügung.

In einer weiteren Ausführungsform der Erfindung sind die Sensoren am Tragelement der Messvorrichtung so angeordnet und konfiguriert, dass mindestens einer der Sensoren den Abstand zum Planum misst und mindestens einer der Sensoren hinter der Einbaubohle den Abstand zum Straßenbelag misst. Dadurch ist es möglich, auf zuverlässige Art und Weise die Schichtdicke des neuen Straßenbelags hinter der Einbaubohle zu messen.

Vorzugsweise umfasst das Tragelement einen ersten Balken, der in Fahrtrichtung gesehen an einer linken oder an einer rechten Seite des Straßenfertigers angeordnet ist. Der Balken bietet eine gute Basis, um daran die Sensoren zu befestigen. Außerdem stellt der Balken für die Messvorrichtung ein geeignetes Mittel dar, um die Messvorrichtung im Gleichgewicht und drehbar so zu lagern, dass diese ihre vorgegebene, z.B. im Wesentlichen horizontale Lage zum Planum selbst dann beibehält, wenn der Straßenfertiger beschleunigt beziehungsweise es zu Erschütterungen auf holpriger Fahrbahn kommt.

In einer weiteren Ausführungsform der Erfindung umfasst das Tragelement einen zweiten Balken, der in Fahrtrichtung gesehen an der anderen Seite, also dem ersten Balken gegenüber, am Straßenfertiger beziehungsweise an der Einbaubohle angeordnet ist. Das Vorhandensein beider Balken ermöglicht es der Messvorrichtung, Meßwerte über einen großen Bereich zur Ermittlung der Schichtdicke aufzunehmen.

In einer besonders stabilen Ausführung der Messvorrichtung sind beide Balken durch mindestens einen zur Fahrtrichtung quer ausgerichteten dritten Balken starr miteinander verbunden. Dadurch wird auch erreicht, dass sämtliche Balken synchron zueinander bewegbar sind, also die Bewegung eines Balkens mit der Bewegung des anderen gekoppelt ist.

Gemäß einer weiteren Ausbildungsform der Erfindung umfasst die Messvorrichtung eine Auswerteeinheit, die dazu ausgebildet ist, die Abstandsmessungen der Sensoren auszuwerten, um die Schichtdicke zu ermitteln. Durch die Auswerteeinheit ist es möglich, sämtliche Abstandsmessungen der Sensoren so zu berücksichtigen, dass ein zuverlässiges und der Praxis gerechtes Messergebnis für die Schichtdicke entsteht. Die Auswerteeinheit kann so konfiguriert sein, dass sie die Schichtdicke resultierend aus einer Differenz des gemessenen Abstands zum Planum und des gemessenen Abstands zur neu eingebauten Schicht errechnet.

Vorzugsweise ist die Auswerteeinheit mit einer Bedienvorrichtung verbunden, die die ermittelte Schichtdicke einem Bediener optisch anzeigt beziehungsweise mittels akustischer Mittel angibt. Vorstellbar ist auch, dass die Bedienvorrichtung dazu ausgebildet ist, dem Bediener mittels optischer oder akustischer Warnsignale angibt, dass durch die Auswerteeinheit eine kritische Schichtdicke, also eine minimale beziehungsweise eine maximale Schichtdicke erreicht ist. Dies bietet den technischen Vorteil, dass ein Bediener mittels geeigneter Handhabe reaktionsschnell auf eine derartige Extremsituation reagieren kann.

Eine weitere vorteilhafte Ausführung sieht für die Messvorrichtung Mittel vor, die dazu ausgebildet sind, eine Drehsteifigkeit, also einen Widerstand gegen die Drehbarkeit der Messvorrichtung, einzustellen. Diese wären vorzugsweise um die Schwenkachse angeordnet. Damit wird erreicht, dass die Messvorrichtung nicht einfach aus der Gleichgewichtslage zu bringen ist, sondern diese selbst dann beibehält, wenn abrupte Beschleunigungs- beziehungsweise Neigungsänderungen auf den Straßenfertiger beziehungsweise die Einbaubohle einwirken. Dies ermöglicht eine ruhige Lagerung der Messvorrichtung in der Gleichgewichtslage, was zu einem verbesserten Ergebnis der Schichtdickenmessung führt.

In einer anderen Ausführung umfasst die Messvorrichtung einen Servomotor, der konfiguriert ist, um eine Drehbewegung der Messvorrichtung um die Drehachse zu unterstützen, sei es, um die Messvorrichtung in ihre Gleichgewichtslage zurück zu versetzten, oder sei es, um die Messvorrichtung entsprechend der Fahrbahnneigung in eine neue Gleichgewichtslage zu versetzen. Dabei ist der Servomotor selbsthemmend ausgebildet, sodass er einer unerwünschten Drehbewegung der Messvorrichtung entgegenwirkt.

Vorzugsweise umfasst die Messvorrichtung mindestens ein Ballastelement, welches an der Messvorrichtung so angeordnet ist, dass sich die Messvorrichtung relativ zum Planum horizontal oder in einem anderen vorgegebenen Winkel zur Horizontalen in einer stabilen Gleichgewichtslage befindet. Durch das Ballastelement ist es möglich, eine erwünschte Gleichgewichtslage der Messvorrichtung auszutarieren und einzustellen, insbesondere dann, wenn das Ballastelement an unterschiedlichen Positionen an der Messvorrichtung befestigbar ist.

In einer weiteren Ausführungsform ist eine Position des Ballastelements manuell oder automatisch relativ zum Tragelement veränderbar, damit die Messvorrichtung den vorgegebenen Winkel zur Horizontalen aufweist. Vorteilhaft ist, wenn die Messvorrichtung mindestens ein Stellglied umfasst, um das Ballastelement zu verlagern. Dabei wäre es möglich hydraulische oder pneumatische Stellglieder zu verwenden. Es könnte auch sein, dass eine automatische Ansteuerung der Stellglieder durch die Bedienvorrichtung geschieht, um die Gleichgewichtslage der Messvorrichtung so zu regeln, dass sie relativ zur Horizontalen den vorgegebenen Winkel aufweist. Dies ermöglicht insbesondere eine genaue Schichtdickenmessung während einer Einbaufahrt über abwechselnd ansteigenden und abfallenden Streckenabschnitten der Fahrbahn.

In einer weiteren Ausführungsform der Erfindung ist die Position des mindestens einen Ballastelements manuell oder automatisch veränderbar, damit sich der Schwerpunkt der Messvorrichtung auf die Drehachse verlagert. Dadurch ist es möglich, beispielsweise vor einer Einbaufahrt, die Messvorrichtung, insbesondere dass mindestens eine Ballastelement, derart zu justieren, dass während der Einbaufahrt eine reduzierte Anzahl an Momenten auf die Messvorrichtung wirken. Dies hat zur Folge, dass die Messvorrichtung trotz Neigungsänderungen des Straßenfertigers bzw. der Einbaubohle während der Einbaufahrt eine stabile Gleichgewichtslage behält.

In einer besonders raffinierten Ausführung der Erfindung ist die Messvorrichtung dazu konfiguriert, zu erfassen, ob sich ihr Schwerpunkt auf der Drehachse befindet. Dazu können beispielsweise Messmittel vorhanden sein, die einen relativen Abstand des Schwerpunkts der Messvorrichtung zur Drehachse ermitteln. Dabei wäre es besonders vorteilhaft, wenn das mindestens eine Ballastelement selbsttätig in eine bestimmte Position verfährt, um den Schwerpunkt zurück auf die Drehachse zu verlagern, wenn die Messvorrichtung erfasst, dass sich der Schwerpunkt nicht auf der Drehachse befindet. Dadurch kann dem Bediener die Montage bzw. das Einstellen der Messvorrichtung erleichtert werden, wobei ebenfalls mit einer erheblichen Zeitersparnis am Einbauort zu rechnen ist.

Für ein genaues Meßergebnis der Schichtdicke ist es vorteilhaft, wenn an der Messvorrichtung mehrere Sensoren vorgesehen sind, um den Abstand zum Planum zu messen. Dadurch ist es möglich, mehrere Abstandswerte in der Berechnung der Schichtdicke mit aufzunehmen.

Zur Schaffung eines repräsentativen Abstandswertes wäre es sinnvoll, die Messvorrichtung dazu auszubilden, einen Mittelwert anhand der mehreren ermittelten Abstandswerte zum Planum zu berechnen, welcher für die Berechnung der Schichtdicke verwendbar ist.

Ebenso ist es von Vorteil, wenn die Messvorrichtung mehrere Sensoren umfasst, um den Abstand zum Straßenbelag zu messen. Ähnlich wie bei der Messung zum Planum ist es dadurch möglich, sich einen Überblick über die Oberflächengegebenheit des neu eingebauten Straßenbelags nicht nur an einer Stelle, sondern an mehreren Stellen zu verschaffen. ,

Vorzugsweise ist die Messvorrichtung dazu ausgebildet, mittels der mehreren Abstandswerte zum Straßenbelag einen Mittelwert zu bilden, welcher den Abstand zum neu eingebauten Straßenbelag repräsentativ darstellt. Durch die Mittelwertbildung kann die Messvorrichtung mit einem geringen Speicher auskommen.

Besonders einfach wäre es die Schichtdicke zu ermitteln, wenn die Messvorrichtung dazu ausgebildet wäre, die Schichtdicke anhand der beiden zuvor erwähnten Mittelwerte zu errechnen. Dies ist durchaus sinnvoll, sofern eine Neigung der Einbaubohle quer zur Fahrtrichtung vernachlässigbar ist.

In einer bevorzugten Ausführungsform der Erfindung sind die mehreren Sensoren zum Erfassen des Abstands zum Planum grüppchenweise am Tragelement angeordnet. Dadurch ist es möglich, stellenweise mehrere Meßergebnisse zu erfassen. Dies führt zu einem verbesserten Ergebnis der Abstandsmessung an einer bestimmten Stelle. Alternativ dazu können die Sensoren äquidistant zueinander am Tragelement angeordnet sein. Dadurch wird erreicht, dass die Schichtdicke des Straßenbelags über die komplette Breite zuverlässig dargestellt wird. Ebenso, also grüppchenweise beziehungsweise in äquidistantem Abstand zueinander, ist es möglich die Sensoren zur Abstandsmessung zum Straßenbelag am Tragelement anzuordnen.

Um zusätzlich die Lagerung der Messvorrichtung am Straßenfertiger beziehungsweise an der Einbaubohle zu verbessern, umfasst die Messvorrichtung Dämpferelemente, die dazu ausgebildet sind, Beschleunigungen des Straßenfertigers beziehungsweise der Einbaubohle zu dämpfen, so dass die Messvorrichtung in der vorgegebenen Gleichgewichtslage stabil bleibt und nicht aus der Ruhe kommt. Vorstellbar wären als Dämpferelemente beispielsweise mechanische oder hydraulische Stoßdämpfer, insbesondere Federn oder Ölstoßdämpfer.

In einer besonders vorteilhaften Ausführungsform der Erfindung umfasst die Messvorrichtung mindestens einen Stabilisator, um zu verhindern, dass Drehmomente auf die Messvorrichtung wirken, selbst dann, wenn der Straßenfertiger beschleunigt. Der mindestens eine Stabilisator kann an unterschiedlichen Stellen der Messvorrichtung angeordnet sein, vorzugsweise jedoch an einem Ende des ersten oder zweiten Balkens, weil an dieser Stelle die größten Momente zu erwarten sind. Dabei zeichnet sich der mindestens eine Stabilisator dadurch aus, dass dessen Trägheitsmoment einer auf die Messvorrichtung wirkenden Beschleunigung derartig entgegenwirkt, sodass die Messvorrichtung die Gleichgewichtslage behält. Besonders auf einer holprigen Einbaustrecke sorgt somit der Stabilisator für eine ruhige Lage der Messvorrichtung.

Vorzugsweise ist für den mindestens einen Stabilisator mindestens ein Kreiselelement vorgesehen. Dieses kann drehbar um eine Achse, die vorzugsweise durch den Schwerpunkt des Kreiselelements verläuft, an der Messvorrichtung angeordnet sein. Das mindestens eine Kreiselelement umfasst einen besonders günstigen geometrischen Körper, um Beschleunigungen ein wirksames Trägheitsmoment entgegenzusetzen. Dabei wäre es zur Erhöhung des Trägheitsmoments vorstellbar, das Kreiselelement als Hohlkörper auszubilden.

Vorstellbar ist allerdings auch, dass der mindestens eine Stabilisator ergänzend oder ersatzweise für das Kreiselement mindestens einen anderen geometrischen Körper umfasst, beispielsweise mindestens einen zylindrischen, kugelförmigen, quaderförmigen, kegelförmigen, kegelstumpfförmigen und/oder pyramidenförmigen Körper. Um ein erwünschtes Trägheitsmoment zu erzielen, können auch solche Körper unterschiedliche Abmessungen umfassen, beziehungsweise als Hohl- oder Vollköper ausgebildet sein.

Vorteilhaft ist auch, dass die Messvorrichtung nicht nur dazu imstande ist, relativ zu einem ebenen Untergrund im Gleichgewicht gelagert zu werden, sondern vielmehr auch dazu in der Lage ist, relativ zu einer Böschung, also zu einem geneigten Untergrund, in eine Gleichgewichtslage versetzbar zu sein. Dabei behält die Messvorrichtung während der Einbaufahrt eine Lage, die zum geneigten Untergrund im Wesentlichen parallel ist. Dadurch ist es möglich selbst auf ungewöhnlichem Untergrund eine zuverlässige Schichtdickemessung vorzunehmen, wie es beispielsweise bei der Asphaltierung beziehungsweise der Befestigung von schrägem Untergrund bzw. Steigungen oder Rampen der Fall ist. Vorzugsweise sind die Ballastelemente 13a, 13b derart an der Messvorrichtung 2 angeordnet, dass der Schwerpunkt S der Messvorrichtung 2 auf die Drehachse 3 verlagert wird.

Zur Berechnung der Schichtdicke eines neu eingebauten Straßenbelags können auch folgende Vorrichtungen und/oder Verfahren eingesetzt werden. Eines davon ist ein Schlitten, der beweglich an der Einbaubohle befestigt ist und sich von dieser durch das neu aufgetragene Mischgut bis zum Planum erstreckt. Eine Verschiebung des Schlittens relativ zur Bohle wird mittels eines translatorischen Sensors erfasst, um eine Höhe der Bohle bezogen auf den Schlitten zu erhalten. Außerdem ist am Schlitten ein Winkelsensor angeordnet, um eine Neigungsänderung des Schlittens relativ zu der Einbaubohle zu erfassen. Die Kombination des Winkelsensors mit dem translatorischen Sensor kann eine geometrische Beziehung zwischen der Hinterkante des Schlittens mit der Bohlenhinterkante derart herstellen, dass die Dicke der eingebauten Schicht berechenbar ist. Damit der Schlitten besser im Mischgut bewegbar ist, kann der Schlitten zusätzlich beheizt werden.

Die Schichtdicke lässt sich auch dadurch ermitteln, indem ein beheizter Haken vor der Einbaubohle, möglicherweise an der Zugmaschine des Straßenfertigers, befestigt ist und derart geformt ist, dass sich das Ende des Hakens sowohl auf dem Planum als auch unterhalb der Bohlenhinterkante in der Einbauschicht befindet. Durch einen an der Einbaubohle befestigten Sensor kann das Ende des Hakens unterhalb der Bohlenhinterkante erfasst werden, um die Schichtdicke zu bestimmen.

Die Schichtdickenberechnung ist auch mittels einer Schlauchwaage möglich, die vorzugsweise drei hintereinander hergezogene sowie miteinander fluidtechnisch verbundene Messglieder umfasst. Dabei werden die beiden ersten Messglieder auf dem Planum geführt, wobei das dritte, letzte Messglied auf der Oberfläche des neu eingebauten Straßenbelags gezogen wird. Die vorderen beiden Messglieder stellen eine Referenz dar, welche durch die hinteren beiden Messglieder, also Schlauchwaagen, zur Dickenbestimmung verwendet werden, sobald sich die mittlere Schlauchwaage an einer Stelle befindet, an der zu einem vorausgegangenen Zeitpunkt das erste Messglied war. Damit im Messergebnis Änderungen der Steigung nicht vernachlässigt werden kann für die Schlauchwaage ein Neigungssensor vorgesehen sein. In einer anderen Variante ist es auch möglich, die Änderung der Steigung anhand der erfaßten Höhenunterschiede der Schlauchwaagen ohne Neigungssensor zu berechnen und in der Dickenbestimmung zu berücksichtigen.

Um auf einfache Art und Weise eine Neigungsreferenz zur Schichtdickenbestimmung herzustellen ist es auch möglich, die Zugmaschine mit zwei über ein Drehgelenk miteinander verbundene Gestelle zu versehen, von denen das vordere mit zwei Punkten das Planum berührt und das hintere mit der gemeinsamen Verbindungsstelle das Planum und mit dem hinteren Punkt die neu eingebaute Schicht berührt. An beiden Gestellen befindet sich jeweils ein Neigungssensor. Somit nimmt das vordere Gestell eine Referenz auf, die zur Ermittlung der Dicke verwendet wird, sobald sich das hintere Gestell auf der alten Position des vorderen Gestells befindet. Ersatzweise kann die Schichtdicke auch mittels eines Infrarotsensors erfaßt werden, der am vorderen Gestell angeordnet ist und eine Höhenänderung des mit dem vorderen Gestell gelenkig verbundenen hinteren Gestells erfaßt.

In einer anderen optionalen Ausführung zur Schichtdickenbestimmung wird eine brückenartige Anordnung über der Einbaubohle derart angeordnet, dass ein erster beweglicher Arm mittels Winkelerfassung auf dem Planum und ein zweiter beweglicher Arm ebenfalls mittels Winkelerfassung auf der neu eingebauten Straßenschicht entlang der Fahrtrichtung geschleppt werden. Ebenfalls können mehrere im Winkel verstellbare Schleppglieder hinter der Einbaubohle hinterher gezogen werden, durch die sich relativ zu einer auf dem Planum befindlichen Referenz die Schichtdicke erfassen lässt. Ebenfalls ist es möglich, die zwei Winkelbrücken drehgelagert auf der Einbaubohle zu befestigen.

Ausführungsformen der Erfindung (Figur 1 und Figur 2) und ein Beispiel, welches nicht Gegenstand der Erfindung ist (Figur 3), werden anhand der im Folgenden beschriebenen Zeichnungen,dargestellt. Es zeigen:

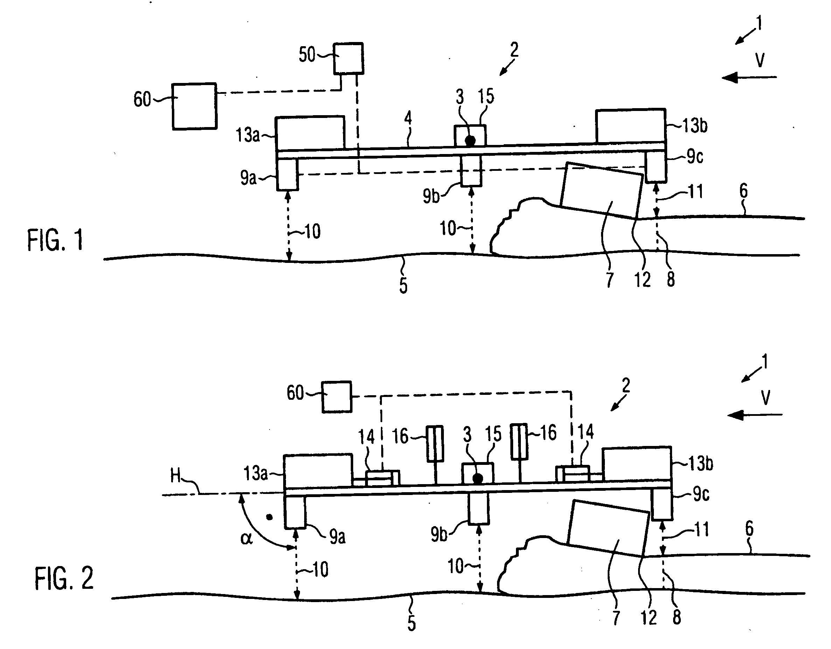

- Figur 1: eine drehbar gelagerte Messvorrichtung gemäß der Erfindung,
- Figur 2: eine gedämpfte Messvorrichtung mit verstellbaren Ballastelementen sowie

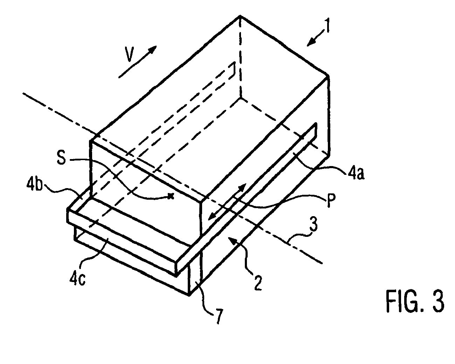

- Figur 3: eine schematische Darstellung eines Straßenfertigers mit montierter Messvorrichtung.

Die Figur 1 zeigt einen Straßenfertiger 1 mit einer Messvorrichtung 2, welche um eine Drehachse 3 drehbar so gelagert ist, dass die Messvorrichtung 2 eine Gleichgewichtslage mit einem vorgegebenen Winkel zur Horizontalen einnimmt. Gemäß dem Ausführungsbeispiel der Figur 1 verläuft die Drehachse 3 durch einen Schwerpunkt S der Messvorrichtung 2.

Außerdem zeigt die Figur 1, dass die Messvorrichtung 2 ein Tragelement 4 aufweist, welches im Wesentlichen horizontal zum Untergrund 5 gelagert ist. Auf dem Untergrund 5 bewegt sich der Straßenfertiger 1 in Fahrtrichtung V fort, wobei der Straßenfertiger 1 auf den Untergrund 5 mit einer Einbaubohle 7 einen Straßenbelag 6 aufbringt. Die Einbaubohle 7 ist beweglich relativ zum Straßenfertiger 1 gelagert, damit es möglich ist, diese durch eine nicht gezeigte Nivellierungstechnik so zu bewegen, dass sie eine Neigungsänderung des Straßenfertigers ausgleicht, um eine ebene Straßenbelagoberfläche zu erzeugen.

Durch die drehbare Gleichgewichtslage der Messvorrichtung 2 ist die Messvorrichtung 2 von den Bewegungen des Straßenfertigers 1 beziehungsweise der Einbaubohle 7 entkoppelt. Dadurch ist es möglich, dass die Messvorrichtung 2 selbst dann ihre Gleichge-wichtslage, also z.B. im Wesentlichen horizontal zum Untergrund 5, beibehält, wenn der Straßenfertiger 1 beziehungsweise die Einbaubohle 7 Neigungsänderungen durchfährt. An dieser Stelle sei erwähnt, dass eine geringe Auslenkung der Messvorrichtung 2 um einen kleinen Winkel für ein gutes Messergebnis der Schichtdicke unschädlich ist, solange sich innerhalb der zur Wegstecke verwendeten Messung der Anstellwinkel der Messvorrichtung 2 nicht stärker ändert als eine vorbestimmte Schwelle.

Ebenfalls zeigt die Figur 1, dass am Tragelement 4 drei Sensoren 9a, 9b, 9c angeordnet sind. Die Sensoren 9a, 9b, 9c sind äquidistant zueinander entlang einer unteren Seite des Tragelement 4 angeordnet. Dabei messen die beiden vorderen Sensoren 9a, 9b einen Abstand 10, der zwischen den Sensoren 9a, 9b und dem Untergrund 5 vorliegt. Der dritte Sensor 9c ist am Tragelement 4 so angeordnet, dass er einen Abstand 11 zum neu eingebauten Straßenbelag 6, genauer gesagt zu dessen Oberfläche, bestimmt. Durch entsprechende konstruktive Maßnahmen ist es möglich, das Tragelement 4 so abzuändern, dass die durch den dritten Sensor 9c durchgeführte Abstandsmessung zum Erfassen des Abstands 11 in einem variierenden Abstand hinter einer hinteren Kante 12 der Einbaubohle 7 ausführbar ist, vorzugsweise jedoch nicht mit zu großem Abstand, um die Messzeit nicht unnötig zu verlängern.

In der Figur 1 ist auch zu sehen, dass auf einer oberen Seite des Tragelements 4 in gleichem Abstand zur Drehachse 3 Ballastelemente 13a, 13b angeordnet sind. Dabei ist es möglich, die Ballastelemente 13a, 13b beliebig auf dem Tragelement 4 anzuordnen, sodass die Messvorrichtung 2 während der Einbaufahrt des Straßenfertigers 1 eine stabile Gleichgewichtslage parallel zum Untergrund 5 einnimmt. Mit den Ballastelementen 13a, 13b ist es auch möglich, durch deren geschickte Anordnung die Messvorrichtung 2 in eine derartige Gleichgewichtslage zu bringen, dass diese selbst zu einem geneigten Untergrund 5 im Wesentlichen parallel ausrichtbar ist.

Neben den Ballastelementen zeigt das dargestellte Ausführungsbeispiel der Figur 1 jeweils einen Stabilisator 17a, 17b, der jeweils an einem äußeren Ende des Tragelements angeordnet ist. Je nach Anwendungsfall kann der Stabilisator 17a, 17b aber auch an einer anderen Stelle der Messvorrichtung 2 angeordnet sein.

Des Weiteren zeigt die Figur 1 eine Auswerteeinheit 50, die mit den Sensoren 9a, 9b, 9c verbunden ist und deren Meßergebnis zur Schichtdicke 8 verarbeitet. Um die errechnete Schichtdicke 8 einem Bediener zu übermitteln, ist eine Bedienvorrichtung 60 vorgesehen, die mit der Auswerteeinheit 50 verbunden ist. Bei der Drehachse 3 sind ferner Mittel 15 angeordnet, die konfiguriert sind, eine Drehsteifigkeit der Messvorrichtung 2 einzustellen.

Die Figur 2 zeigt die Messvorrichtung 2 zusätzlich mit Dämpferelementen 16, die eine Bewegung des Tragelements 4 dämpfen, jedoch für die Erfindung nicht zwingend notwendig sind. Die Dämpferelemente 16 sind relativ zur Drehachse 3 äquidistant angeordnet, wobei an unterschiedlichen Stellen am Tragelement 4 angreifen können. Darüber hinaus zeigt die Figur 2 Stellglieder 14, die mit den Ballastelementen 13a, 13b sowie mit der Bedienvorrichtung 60 verbunden sind, wobei die Stellglieder 14 als Kolben-ZylinderEinheiten ausgebildet sind, die die Ballastelemente 13a, 13b verschieben können. Schließlich ist in der Figur 2 eine Horizontale H gezeigt. Die Horizontale H gilt als Referenz zur Bestimmung des vorgegebenen Winkels, um die Meßvorrichtung 2 in der erwünschten Gleichgewichtslage zu halten. Hier ist der vorgegebene Winkel a = 90° der Winkel zwischen der Horizontalen H und der Messrichtung der Sensoren 9a, 9b, 9c.

In der Figur 3 ist schematisch ein Straßenfertiger 1 mit einer daran um die Drehachse 3 drehbar gelagerten Messvorrichtung 2 dargestellt. Dabei umfasst das Tragelement 4 einen ersten Balken 4a, einen zweiten Balken 4b und einen dritten Balken 4c, der den ersten und den zweiten Balken 4a, 4b verbindet. Der erste und der zweite Balken 4a, 4b ragen über die Bohle 7 hinaus, um den Abstand 11 zum neuen Straßenbelag 6 zu messen. Außerdem zeigt die Figur 3 den Schwerpunkt S der Messvorrichtung 2, welcher hier unterhalb also nicht wie erfindungsgemäß auf der Drehachse 3 liegt. Ein Doppelpfeil P stellt in der Figur 3 dar, dass die Messvorrichtung 2 oder die Drehachse 3 verschiebbar ist, sodass die Messvorrichtung eine Gleichgewichtslage mit einem vorgegebenen Winkel aufweist. Selbst wenn es durch die Figur 3 nicht gezeigt ist, wäre es möglich, einen vierten Balken zu verwenden, um mit diesem, gegenüber zum dritten Balken 4c, die nicht verbundenen Enden des ersten und des zweiten Balkens 4a, 4b miteinander zu verbinden. Dabei würden die Balken des Tragelements 4 eine geschlossene Rahmenkonstruktion darstellen.

Die Messvorrichtung 2, wie sie bei der Erfindung für den Straßenfertiger 1 verwendet wird, ist ebenfalls zur Schichtdickenmessung an anderen Baumaschinen anwendbar, welche andere Schichten als einen Straßenbelag auf einem Untergrund aufbringen. Vorstellbar sind beispielsweise Baumaschinen, die lediglich Sandschichten beziehungsweise Kieselsteinschichten aufbringen.

## Patentansprüche

1. Straßenfertiger (1) mit einer Messvorrichtung (2) zur Ermittlung einer Schichtdicke (8) eines Straßenbelags (6) und mit einer Einbaubohle (7) zum Aufbringen des Straßenbelags (6), wobei die Messvorrichtung (2) ein Tragelement (4) und mindestens zwei Sensoren (9) umfasst, die an dem Tragelement (4) angeordnet sind, wobei die Sensoren (9) dazu ausgebildet sind, einen Abstand (10, 11) zum Planum (5) oder zum Straßenbelag (6) zu messen, wobei die Messvorrichtung (2) derart drehbar am Straßenfertiger (1) oder der Einbaubohle (7) gelagert ist, dass sie eine Gleichgewichtslage mit einem vorgegebenen Winkel zur Horizontalen (H) aufweist, die sie behält oder in die sie zurückkehrt, selbst wenn sich die Neigung des Straßenfertigers (1) oder der Bohle (7) zur Horizontalen (H) ändert, und wobei die Messvorrichtung (2) um eine Drehachse (3) drehbar gelagert ist,
**dadurch gekennzeichnet,**
**dass** die Drehachse (3) durch einen Schwerpunkt (S) der Messvorrichtung (2) verläuft.

2. Straßenfertiger nach Anspruch 1, **dadurch gekennzeichnet, dass** die Messvorrichtung (2) an verschiedenen Stellen am Straßenfertiger (1) oder an der Einbaubohle (7) anbringbar ist.

3. Straßenfertiger nach einem der vorigen Ansprüche, **dadurch gekennzeichnet, dass** die Messvorrichtung (2) mindestens ein Ballastelement (13) umfasst, welches an der Messvorrichtung (2) angeordnet ist.

4. Straßenfertiger nach Anspruch 3, **dadurch gekennzeichnet, dass** eine Position des mindestens einen Ballastelements (13) manuell oder automatisch veränderbar ist, damit sich der Schwerpunkt (S) der Messvorrichtung (2) auf die Drehachse (3) verlagert.

5. Straßenfertiger nach Anspruch 4, **dadurch gekennzeichnet, dass** die Messvorrichtung (2) mindestens ein Stellglied (14) umfasst, um das mindestens eine Ballastelement (13) zu verlagern.

6. Straßenfertiger nach einem der vorangehenden Ansprüche 3 bis 5, **dadurch gekennzeichnet, dass** die Messvorrichtung (2) dazu konfiguriert ist, zu erfassen, ob sich ihr Schwerpunkt (S) auf der Drehachse (3) befindet.

7. Straßenfertiger nach Anspruch 6, **dadurch gekennzeichnet, dass** das mindestens eine Ballastelement (13) selbsttätig in eine bestimmte Position verfährt, um den Schwerpunkt (S) zurück auf die Drehachse (3) zu verlagern, wenn die Messvorrichtung (2) erfasst, dass sich der Schwerpunkt (S) nicht auf der Drehachse (3) befindet.

8. Straßenfertiger nach einem der vorigen Ansprüche, **dadurch gekennzeichnet, dass** die Messvorrichtung (2) Mittel (15) umfasst, die dazu ausgebildet sind, eine Drehsteifigkeit, also einen Widerstand gegen die Drehbarkeit der Messvorrichtung (2), einzustellen.

9. Straßenfertiger nach einem der vorigen Ansprüche, **dadurch gekennzeichnet, dass** die Messvorrichtung (2) mindestens einen Stabilisator (17a, 17b) umfasst, um Beschleunigungen auf die Messvorrichtung (2) zu reduzieren.

10. Straßenfertiger nach Anspruch 9, **dadurch gekennzeichnet, dass** der mindestens eine Stabilisator (17a, 17b) mindestens ein Kreiselelement umfasst.

11. Straßenfertiger nach einem der vorigen Ansprüche, **dadurch gekennzeichnet, dass** die Messvorrichtung (2) eine Auswerteeinheit (50) umfasst, die dazu ausgebildet ist, die Abstandsmessungen der Sensoren (9) auszuwerten, um die Schichtdicke (8) zu ermitteln.

12. Straßenfertiger nach einem der vorigen Ansprüche, **dadurch gekennzeichnet, dass** das Tragelement (4) einen ersten Balken (4a) und/oder einen zweiten Balken (4b) umfasst, wobei der erste Balken (4a) in Fahrtrichtung (V) gesehen an einer rechten oder linken Seite des Straßenfertigers (1) angeordnet ist und der zweite Balken (4b) an der anderen Seite des Straßenfertigers (1) angeordnet ist.

## Claims

1. Road paver (1) with a measuring device (2) for determining a layer thickness (8) of a road pavement (6) and with a screed (7) for laying the road pavement (6), wherein the measuring device (2) comprises a support element (4) and at least two sensors (9) that are arranged on the support element (4), whereby the sensors (9) are formed to measure a distance (10, 11) to the plane (5) or to the road pavement (6), wherein the measuring device (2) is rotatably supported on the road paver (1) or screed (7) in such a way that it has an equilibrium position at a stipulated angle to the horizontal (H) that it retains or to which it returns even if the inclination of the road paver (1) or of the screed (7) to the horizontal (H) changes, and wherein the measuring device (2) is supported in such a way that it can rotate around an axis of rotation (3),
**characterised in that** the axis of rotation (3) runs through a centre of gravity (S) of the measuring device (2).

2. Road paver according to claim 1, **characterised in that** the measuring device (2) can be attached to the road paver (1) or to the screed (7) at different places.

3. Road paver according to claim 1 or 2, **characterised in that** the measuring device (2) comprises at least one ballast element (13) which is arranged on the measuring device (2).

4. Road paver according to claim 3, **characterised in that** a position of the at least one ballast element (13) can be manually or automatically changed so that the centre of gravity (S) of the measuring device (2) is relocated on to the axis of rotation (3).

5. Road paver according to claim 4, **characterised in that** the measuring device (2) comprises at least one actuating element (14) in order to relocate the at least one ballast element (13).

6. Road paver according to one of the preceding claims 3 to 5, **characterised in that** the measuring device (2) is configured to register whether or not its centre of gravity (S) lies on the axis of rotation (3).

7. Road paver according to claim 6, **characterised in that** the at least one ballast element (13) automatically moves into a particular position in order to relocate the centre of gravity (S) back on to the axis of rotation (3) when the measuring device (2) registers that the centre of gravity (S) is not located on the axis of rotation (3).

8. Road paver according to one of the preceding claims, **characterised in that** the measuring device (2) comprises means (15) that are formed to set up a torsional rigidity, meaning a resistance to the rotatability of the measuring device (2).

9. Road paver according to one of the preceding claims, **characterised in that** the measuring device (2) comprises at least one stabilizer (17a, 17b) in order to reduce accelerations on to the measuring device (2).

10. Road paver according to claim 9, **characterised in that** the at least one stabilizer (17a, 17b) comprises at least one gyro element.

11. Road paver according to one of the preceding claims, **characterised in that** the measuring device (2) comprises an evaluation unit (50) that is configured to evaluate the distance measurements of the sensors (9) in order to determine the layer thickness (8).

12. Road paver according to one of the preceding claims, **characterised in that** the support element (4) comprises a first bar (4a) and / or a second bar (4b), wherein the first bar (4a) is arranged, seen in the direction of travel (V), on a right or left side of the road paver (1) and the second bar (4b) is arranged on the other side of the road paver (1).

## Revendications

1. Finisseur de route (1) comprenant un dispositif de mesure (2) destiné à déterminer une épaisseur de couche (8) d'un revêtement routier (6), et comprenant une table de finisseur (7) pour appliquer le revêtement routier (6), finisseur de route
dans lequel le dispositif de mesure (2) comprend un élément porteur (4) et au moins deux capteurs (9) qui sont agencés sur l'élément porteur (4),
dans lequel les capteurs (9) sont conçus pour mesurer une distance (10, 11) à la plateforme de chaussée (5) ou au revêtement routier (6),
dans lequel le dispositif de mesure (2) est monté rotatif sur le finisseur de route (1) ou sur la table de finisseur (7), de manière à présenter une position d'équilibre avec un angle prédéterminé par rapport à l'horizontale (H), qu'il conserve ou dans laquelle il retourne, même lorsque l'inclinaison du finisseur de route (1) ou de la table (7) par rapport à l'horizontale (H) varie,
et dans lequel le dispositif de mesure (2) est monté rotatif autour d'un axe de rotation (3),
**caractérisé en ce que** l'axe de rotation (3) passe par un centre de gravité (S) du dispositif de mesure (2).

2. Finisseur de route selon la revendication 1, **caractérisé en ce que** le dispositif de mesure (2) peut être monté en différents endroits sur le finisseur de route (1) ou sur la table de finisseur (7).

3. Finisseur de route selon l'une des revendications précédentes, **caractérisé en ce que** le dispositif de mesure (2) comprend au moins un élément de lest (13), qui est agencé sur le dispositif de mesure (2).

4. Finisseur de route selon la revendication 3, **caractérisé en ce qu'**une position dudit au moins un élément de lest (13) peut être modifiée manuellement ou automatiquement, en vue de faire se déplacer le centre de gravité (S) du dispositif de mesure (2) sur l'axe de rotation (3).

5. Finisseur de route selon la revendication 4, **caractérisé en ce que** le dispositif de mesure (2) comprend au moins un organe de réglage (14) pour déplacer ledit au moins un élément de lest (13).

6. Finisseur de route selon l'une des revendications précédentes 3 à 5, **caractérisé en ce que** le dispositif de mesure (2) est configuré pour détecter si son centre de gravité (S) se trouve sur l'axe de rotation (3).

7. Finisseur de route selon la revendication 6, **caractérisé en ce que** ledit au moins un élément de lest (13) se déplace automatiquement dans une position déterminée, pour ramener le centre de gravité (S) sur l'axe de rotation (3), lorsque le dispositif de mesure (2) détecte que le centre de gravité (S) ne se trouve pas sur l'axe de rotation (3).

8. Finisseur de route selon l'une des revendications précédentes, **caractérisé en ce que** le dispositif de mesure (2) comprend des moyens (15), qui sont conçus pour régler une rigidité de rotation, c'est-à-dire une résistance à la capacité de rotation du dispositif de mesure (2).

9. Finisseur de route selon l'une des revendications précédentes, **caractérisé en ce que** le dispositif de mesure (2) comprend au moins un stabilisateur (17a, 17b), pour réduire des accélérations sur le dispositif de mesure (2).

10. Finisseur de route selon la revendication 9, **caractérisé en ce que** ledit au moins un stabilisateur (17a, 17b) comprend au moins un élément gyroscopique.

11. Finisseur de route selon l'une des revendications précédentes, **caractérisé en ce que** le dispositif de mesure (2) comprend une unité de traitement de données (50), qui est conçue pour traiter les mesures de distance des capteurs (9), en vue de déterminer l'épaisseur de couche (8).

12. Finisseur de route selon l'une des revendications précédentes, **caractérisé en ce que** l'élément porteur (4) comprend une première poutre (4a) et/ou une deuxième poutre (4b), la première poutre (4a) étant agencée sur le côté droit ou sur le côté gauche du finisseur de route (1), en se référant à la direction d'avancement (V), et la deuxième poutre (4b) étant agencée sur l'autre côté du finisseur de route (1).
